(19) Europäisches Patentamt
European Patent Office
Office européen des brevets

(11) **EP 2 402 906 A2**

(12) **EUROPEAN PATENT APPLICATION**

(43) Date of publication:
**04.01.2012 Bulletin 2012/01**

(51) Int Cl.:
**G06T 7/00** (2006.01)   **G06T 19/00** (2011.01)

(21) Application number: **11170889.7**

(22) Date of filing: **22.06.2011**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **30.06.2010 KR 20100063053** | (71) Applicant: **Pantech Co., Ltd.**<br>**Seoul 121-270 (KR)**<br><br>(72) Inventor: **Park, Sun-Hyung**<br>**121-270 Seoul (KR)**<br><br>(74) Representative: **Jordan, Volker Otto Wilhelm**<br>**Postfach 860 820**<br>**81635 München (DE)** |

(54) **Apparatus and method for providing 3D augmented reality**

(57)     An apparatus to provide three-dimensional (3D) augmented reality (AR) image includes an image obtainer to obtain an image including an object, and an image processor to calculate 3D position information about the object, obtain AR data corresponding to the object, covert the AR data according to the 3D position information, and generate a 3D AR image using the converted AR data and the obtained image. A method for providing 3D AR image includes obtaining an image including an object, calculating 3D position information of the object, obtaining AR data corresponding to the object, converting AR data according to the 3D position information, generating a 3D AR image using the converted AR data and the obtained image, and displaying the generated 3D AR image.

FIG. 4

EP 2 402 906 A2

**Description**

CROSS-REFERENCE TO RELATED APPLICATION

This application claims priority from and the benefit under 35 U.S.C. §119(a) of Korean Patent Application No. 10-2010-0063053, filed on June 30, 2010, which is incorporated by reference for all purposes as if fully set forth herein.

BACKGROUND

1. FIELD

The following description relates to augmented reality (AR) data and image processing technology for providing three-dimensional (3D) AR.

2. DISCUSSION OF THE BACKGROUND

AR is a computer graphic technique of superimposing a virtual object or information onto an actual environment to show the virtual object, etc. as if in its original environment.

Unlike a conventional virtual reality which is intended only for virtual spaces and objects, AR superimposes a virtual object onto the real world, thereby additionally providing complementary information which is difficult to obtain from the real world. Due to this characteristic, AR can be applied in various real environments, unlike conventional virtual reality, which can be applied only to limited fields such as video games. In particular, AR has taken the spotlight as next-generation display technology appropriate for a ubiquitous environment.

Conventionally, AR superimposes a virtual object using a tag or marker onto an image input from one camera, thereby providing a two-dimensional (2D) image regardless of perspective or depth of the image.

SUMMARY

Exemplary embodiments of the present invention provide a 3D AR image system, and a method for providing a 3D AR image.

Additional features of the invention will be set forth in the description which follows, and in part will be apparent from the description, or may be learned by practice of the invention.

Exemplary embodiments of the present invention provide an apparatus to provide three-dimensional (3D) augmented reality (AR) image, including an image obtainer to obtain an image including an object; and an image processor to calculate 3D position information about the object, to obtain AR data corresponding to the object, to covert the AR data according to the calculated 3D position information, and to generate a 3D AR image using the converted AR data and the obtained image.

Exemplary embodiments of the present invention provide an image processor to provide 3D AR image, including a 3D position information calculator to calculate 3D position information about an object included in an image, an AR data converter to obtain AR data corresponding to the object, and to convert the AR data according to the generated 3D position information, and an AR image generator to generate a 3D AR image using the converted AR data and the obtained image.

Exemplary embodiments of the present invention provide a method for providing 3D AR image, including, obtaining an image including an object; calculating 3D position information of the object, obtaining AR data corresponding to the object, converting the AR data according to the 3D position information, generating a 3D AR image using the converted AR data and the obtained image; and displaying the generated 3D AR image.

In particular, the invention provides inter alia the following items:

1. An apparatus to provide three-dimensional (3D) augmented reality (AR) image, comprising:

    an image obtainer to obtain an image including an object; and
    an image processor to calculate 3D position information of the object, to obtain AR data corresponding to the object, to convert the AR data according to the 3D position information, and to generate a 3D AR image using the converted AR data and the image.

2. The apparatus of item 1, wherein the image obtainer comprises:

    a first camera to obtain a first image of the object; and
    second camera to obtain a second image of the object.

3. The apparatus of item 2, wherein the image processor obtains distance information of the object using the first image and the second image, and calculates the 3D position information using the distance information.

4. The apparatus of item 2, wherein the image processor obtains distance information of the object using an auto-focusing function of the first camera or the second camera, and calculates the 3D position information using the distance information.

5. The apparatus of item 2, wherein the image processor generates first AR data to be superimposed onto the first image and second AR data to be superimposed onto the second image on the basis of the 3D position information, superimposes the generated first AR data onto the first image to form an augmented first image and superimposes the generated second AR data onto the second image to form an augmented second image, and then generates the 3D AR image by combining the augmented first image and the augmented second image.

6. The apparatus of item 5, wherein the generated 3D AR image comprises;
a first object and a second object, positioned farther than the first object.

7. The apparatus of item 6, wherein the second AR data corresponding to the second object is positioned farther than the first AR data corresponding to the first object.

8. The apparatus of item 1, further comprising a sensor, comprising:

a global positioning system (GPS) sensor, an acceleration sensor, or a terrestrial magnetism sensor.

9. The apparatus of item 8, wherein the image processor designates an area in the obtained image using sensing information of the sensor and detects the object in the designated area.

10. The apparatus of item 1, further comprising an image display to display the 3D AR image.

11. An image processor to provide three-dimensional (3D) augmented reality (AR) image, comprising:

a 3D position information calculator to calculate 3D position information of an object included in an image;
an AR data converter to obtain AR data corresponding to the object, and
to covert the AR data according to the 3D position information; and
an AR image generator to generate a 3D AR image using the converted AR data and the obtained image.

12. The apparatus of item 11, wherein the 3D position information calculator obtains distance information of the object using a first image of the object and a second image of the object, and calculates the 3D position information using the obtained distance information.

13. The apparatus of item 11, wherein the 3D position information calculator obtains distance information of the object using an auto-focusing function, and calculates the 3D position information using the obtained distance information.

14. The apparatus of item 11, wherein the AR data converter superimposes the converted first AR data onto a first image of the object and superimposes the converted second AR data onto a second image of the object on the basis of the 3D position information.

15. The apparatus of item 14, wherein the AR image generator superimposes the first AR data onto the first image and the second AR data onto the second image, and generates the 3D AR image using the augmented first image and second image.

16. A method for providing three-dimensional (3D) augmented reality (AR) image, comprising:

obtaining an image including an object;
calculating 3D position information of the object;
obtaining AR data corresponding to the object;
converting the AR data according to the 3D position information;
generating a 3D AR image using the converted AR data and the obtained image; and
displaying the generated 3D AR image.

17. The method of item 16, wherein the obtaining of the image comprises obtaining a first image and a second image of the object.

18. The method of item 17, wherein calculating the 3D position information comprises obtaining distance information about the object using the first image and the second image, and calculating the 3D position information using the obtained distance information.

19. The method of item 17, wherein calculating the 3D position information comprises obtaining distance information about the object using an auto-focusing function of a camera for obtaining the first image and the second image, and calculating the 3D position information using the obtained distance information.

20. The method of item 17, wherein converting the AR data comprises superimposing the converted first AR data onto the first image and superimposing the converted second AR data onto the second image on the basis of the 3D position information.

21. The method of item 20, wherein generating the 3D AR image comprises superimposing the first AR data onto the first image and the second AR data onto the second image, and generating the 3D AR image using the augmented first image and second image.

22. The method of item 16, wherein displaying the AR image comprises displaying the 3D AR image so that AR data corresponding to the first object is displayed closer than AR data corresponding to the second object, if the generated AR image comprises a first object and a second object, where the second object is positioned farther than the first object.

It is to be understood that both foregoing general descriptions and the following detailed description are exemplary and explanatory and are intended to provide further explanation of the invention as claimed. Other features and aspects will be apparent from the following detailed description, the drawings, and the claims.

BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a block diagram illustrating an apparatus to provide a 3D AR image according to an exemplary embodiment of the invention.

FIG. 2 is a block diagram illustrating an image processor according to an exemplary embodiment of the invention.

FIG. 3 illustrates a diagram for calculating 3D position information according to an exemplary embodiment of the invention.

FIG. 4 illustrates a process for generating a 3D AR image according to an exemplary embodiment of the invention.

FIG. 5 is a flowchart illustrating a method for providing a 3D AR image according to an exemplary embodiment of the invention.

FIG. 6 illustrates the principle for obtaining the distance of an object according to an exemplary embodiment of the invention.

DETAILED DESCRIPTION OF THE ILLUSTRATED EMBODIMENTS

The invention is described more fully hereinafter with references to the accompanying drawings, in which exemplary embodiments of the invention are shown. This invention may, however, be embodied in many different forms and should not be construed as limited to the embodiments set forth herein. Rather, these exemplary embodiments are provided so that this disclosure is thorough, and will fully convey the scope of the invention to those skilled in the art. Throughout the drawings and the detailed description, unless otherwise described, the same drawing reference numerals are understood to refer to the same elements, features, and structures. The relative size and depiction of these elements may be exaggerated for clarity, illustration, and convenience.

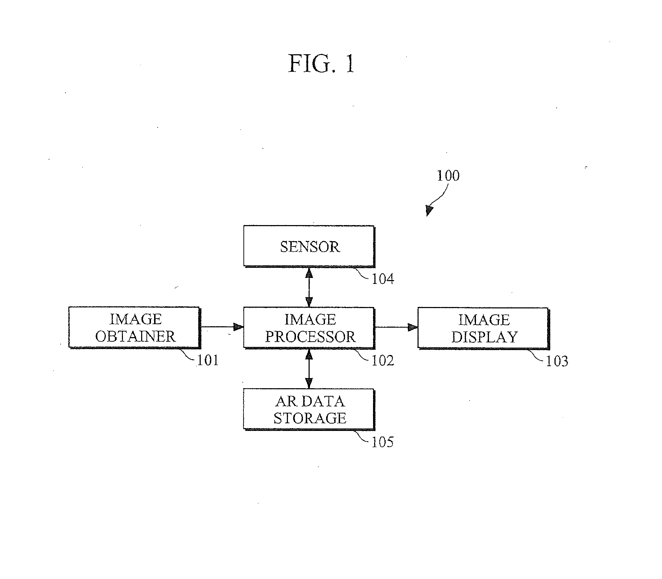

FIG. 1 is a block diagram illustrating an apparatus to provide a 3D AR image according to an exemplary embodiment of the invention.

As shown in FIG. 1, the apparatus 100 for providing a 3D AR image may be applied to various types of equipment capable of displaying a 3D image. As an example, the apparatus 100 to provide a 3D AR image may be applied to a smartphone equipped with a camera module and a display module. Also, if an image is three-dimensionally displayed, the apparatus 100 may display a specific object in the image together with AR data of the object. As an example, when a tree is photographed and displayed by the apparatus 100, AR data including the name, the main habitat, the ecological characteristics, etc. of the tree may be three-dimensionally displayed together with an image of the tree. Among 3D image display methods, any of glasses methods and no-glasses methods may be used. Among the no-glasses methods, a parallax barrier method and a lenticular screen method may be used.

In an example, the apparatus 100 includes an image obtainer 101, an image processor 102, and an image display 103, a sensor 104, and an AR data storage 105.

The image obtainer 101 obtains an image including an object. The image obtainer 101 may be a camera or an image sensor. The image processor 102 processes an image obtained from the image obtainer 101 and generates a 3D AR image. More specifically, the image processor 102 detects an object from the image, calculates 3D position information of the object, obtains AR data corresponding to the object, and superimposes the obtained AR data onto the obtained image to generate a 3D AR image. The image processor 102 may be an image signal processor (ISP) or a software module executed in the ISP. The image display 103 displays the generated 3D AR image. Sensor 104 measures an object from an image using one or more of a current position, a current time, an angle of direction of the image, etc. The sensor 104 may include at least one of a global positioning system (GPS) sensor, an acceleration sensor, and a terrestrial magnetism sensor. Lastly, the AR data storage 105 stores the AR data corresponding to an object. The AR data storage 105 may be included in the apparatus 100, or may be established outside of the apparatus 100 to connect with the apparatus 100 via a communication network.

As an example, the image obtainer 101 may include a first camera to photograph a left image and a second camera to photograph a right image to generate a 3D image. The image processor 102 combines the left image obtained by the first camera and the right image obtained by the second camera and displays a combined 3D image.

In an example, the image processor 102 may detect an object from the image. The object may be a person, object, or marker. The image processor 102 may detect an object on the basis of an object detection algorithm. Also, it may be possible to selectively detect an object from an image using one or more of a current position, a current time, an angle of direction of the image, etc. measured by the sensor 104.

Further, the image processor 102 may calculate 3D position information about the object included in the image. The 3D position information may include information about the distance of the object from the apparatus 100. Thus, when there are two objects in the image and the two objects are at different positions, each object may have its own 3D position information. 3D position information, such as the distance of an object, may be calculated in various ways.

In an example, the image obtainer 101 may include a first camera and a second camera installed at a predetermined interval to obtain a 3D image. The image processor 102 may obtains an interval between the first camera and the second camera, as well as the angles of the first camera and the second camera photographing an object. Based on the obtained information, the image processor 102 may calculate the distance of the object using basic trigonometry.

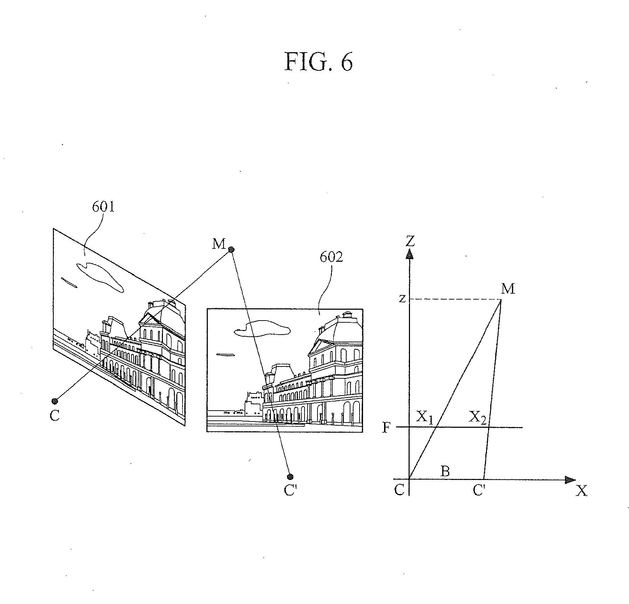

FIG. 6 illustrates a method for obtaining the distance of an object according to an exemplary embodiment of the invention. As shown in FIG. 6, the distance of an object is calculated using a stereo camera in which a left camera and a right camera are combined, like human eyes. As an example, the left camera is positioned at point C, and the right camera is positioned at a point C'. A first image 601 may be obtained from the left camera, and a second image 602 may be obtained from the right camera. Once both of the images are obtained, the distance from the first image 601 or the second image 602 to a specific point M can be calculated by the following equation.

$$z = (B/d)*F$$

As an example, z denotes the distance of the point M to a first axis through which both points C and C' pass, measured along a second axis perpendicular to the first axis. B denotes the distance between the points C and C', d denotes a difference between coordinates of the point M in the respective images (i.e., a difference between $X_1$ and $X_2$), and F denotes a focal length of camera lenses. B can be given as a constant or measured, d can be calculated using the sum of squared difference (SSD) method, and F is determined according to the camera lenses. Thus it is possible to calculate the distance z of the point M using two images.

In another example of calculating the distance of an object, the image obtainer 101 may include a first camera and a second camera installed at a predetermined interval. The respective cameras may be equipped with an auto-focusing function. The image processor 102 may calculate the distance of the object using a focal length obtained when the first and second cameras automatically adjust their focuses, and the interval between the first camera and the second camera.

Also, the image processor 102 may convert AR data according to 3D position information of the corresponding object and superimpose the converted AR data onto the obtained image to generate a 3D AR image to be displayed on the image display 103.. In an example, AR data of a first object and AR data of a second object stored in the AR data storage 105 may not have distance or spatial information. Accordingly, when the image processor 102 superimposes the AR data onto an image, the first object and the second object may be displayed with the first object displayed closer than the second object, but the first object and second object may not be displayed three-dimensionally as objects having xyz dimensions. For this reason, the image processor 102 may convert AR data according to 3D position information of the corresponding object and superimpose the converted AR data onto an obtained image to generate a 3D AR image so that the AR data to be displayed three-dimensionally displayed with the object.

Thus, apparatus 100 converts AR data according to 3D position information of the corresponding object and then superimposes the converted AR data onto an image, it is possible to three-dimensionally provide an AR image to a user.

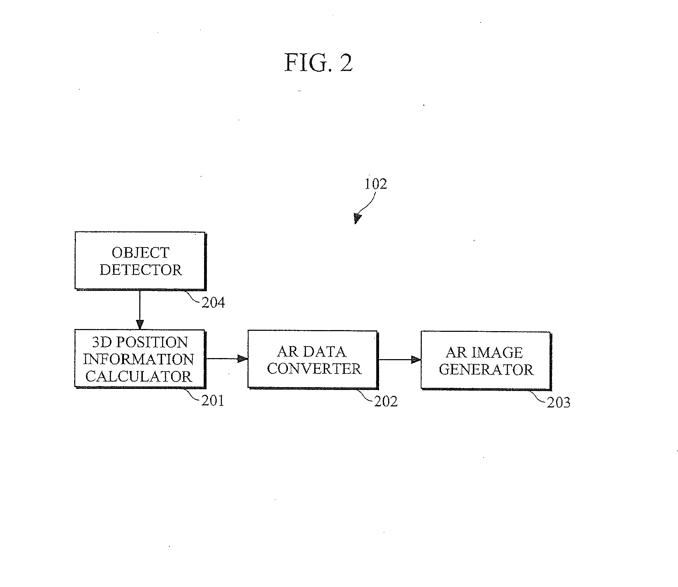

FIG. 2 is a block diagram illustrating an image processor according to an exemplary embodiment of the invention.

In an example, the image processor 102 as shown in FIG. 2 includes a 3D position information calculator 201, an AR data converter 202, an AR image generator 203, and an object detector 204.

The object detector 204 detects an object of interest in an obtained image. The object detector 204 may detect an object from an image in one of various ways. For example, the object detector 204 can designate a specific area in an image with the help of sensing information (e.g., one or more of a current position, a current time, and a photographing direction) and detect an object in the designated specific area. In an example, there are a first object and a second object, where the second object is located farther than the first object in an obtained image.

The 3D position information calculator 201 calculates 3D position information about the detected object. As an example, the 3D position information calculator 201 can calculate the distance of the object using the interval between a first camera which obtains a left image of the object and a second camera which obtains a right image of the object. The 3D position information calculator 201 can also calculate the focal directions of the first camera and the second camera. As an example, the 3D position information calculator 201 can calculate the distance of the object using the measured interval between the first camera and the second camera and the auto-focusing function of the cameras. Accordingly, the 3D position information calculator 201 can recognize that the second object is farther than the first object by obtaining the distances of the first object and the second object.

The AR data converter 202 obtains AR data of the first object corresponding to the first object and AR data of the second object corresponding to the second object. For example, the AR data converter 202 can obtain AR data by extracting related information from the AR data storage 105. Once AR data has been obtained, the AR data converter 202 converts the AR data of the first object and the AR data of the second object according to 3D position information about the respective objects. Thus, the AR data can also be three-dimensionally displayed in a final 3D image. For example, if the first object is closer than the second object, the AR data converter 202 can convert the image so that the AR data of the first object is placed in front of the AR data of the second object. In the aspect of the first object alone, first AR data of the first object to be superimposed onto the left image of the first camera and second AR data of the first object to be superimposed onto the right image of the second camera can be separately generated.

The AR image generator 203 superimposes the converted AR data onto the obtained image to generate a 3D AR image. For example, the AR image generator 203 may superimpose the first AR data of the first object onto the left image of the first camera and the second AR data of the second object onto the right image of the second camera, to produce augmented left and right images respectively. Then the augmented left image and the right image are combined to generate a final 3D AR image.

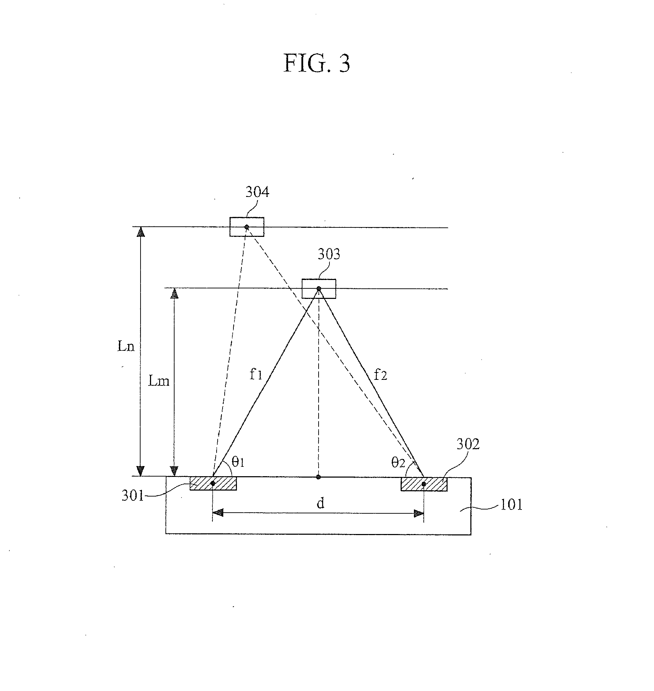

FIG. 3 illustrates a diagram for calculating 3D position information according to an exemplary embodiment of the invention. The diagram shown in FIG. 3 describes a method for obtaining 3D position information about the first object 303 and the second object 304 if a space including the first object 303 and the second object 304 is photographed by a first camera 301 and a second camera 302.

Referring to FIG. 3, the image obtainer 101, in an example, includes a first camera 301 and a second camera 302. An interval d between the first camera 301 and the second camera 302 may be fixed. To generate a 3D image, the image obtainer 101 takes a left eye image of first object 303 and second object 304 using the first camera 301 and a right eye image of the same first object 303 and second object 304 using the second camera 302.

As an example, the first camera 301 and the second camera 302 photograph the same object (e.g. first object 303), at the same time so that the photographing directions of the first camera 301 and second camera 302 can be adjusted. In other words, it is possible to obtain a photographing direction $\theta_1$ of the first camera 301 and a photographing direction $\theta_2$ of the second camera 302 if the first object 303 is photographed by both cameras. Since the interval d between the first camera 301 and the second camera 302 is fixed, a distance Lm of the first object 303 can be calculated using $\theta_1$, $\theta_2$ and d.

As an example, if the first camera 301 and the second camera 302 are equipped with the auto-focusing function and photograph the same object, a photographing distance of f1 and f2 may be calculated. More specifically, by photographing the same object with both cameras with auto-focusing function, a photographing distance f1 between the first object 303 and the first camera 301, and a photographing distance f2 between the first object 303 and the second camera 302 may be calculated. Since the interval d between the first camera 301 and the second camera 302 may be fixed as mentioned above, the distance Lm of the first object 303 can be calculated using $f_1$, $f_2$ and d.

The distance Ln of the second object 304 can be calculated in the same manner as described above for determining distance Lm. Also, the relative distance of the second object 304 with respect to the first object 303 (i.e., whether the second object 304 is closer or farther than the first object) can be selectively obtained without calculating the absolute distance Ln.

In FIG. 3, disclosure has been provided in reference to only the two objects 303 and 304 for convenience. However, it will be appreciated by those of ordinary skill in the art that the same method can also be applied to only a single object, or to more than two objects. For example, by using sensing information of the sensor 104, it may be determined which object is the object of interest extract with interest from an obtained. Thus, the methods disclosed in FIG. 3 may be applied to multiple objects that are more than two in number.

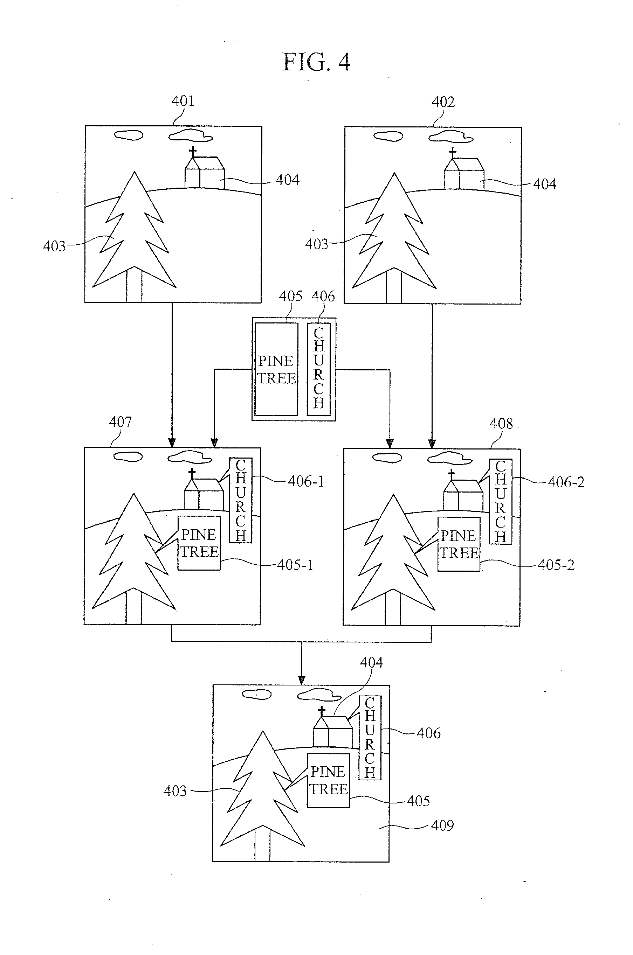

FIG. 4 illustrates a process for generating a 3D AR image according to an exemplary embodiment of the invention.

Referring to FIG. 4, a left eye image 401 and a right eye image 402 may be used to generate a 3D image in an example. The left eye image 401 can be taken by the first camera 301 of the image obtainer 101, and the right eye image 402 can be taken by the second camera 302 of the image obtainer 101.

As shown in FIG. 4, the left eye image 401 and the right eye image 402 both contain a first object 403 and a second object 404. In an example, the first object 403 is a tree which is closer than the second object 404, represented by a church. Once the left eye image 401 and the right eye image 402 have been obtained, the image processor 102 can obtain 3D position information (e.g., distance or position coordinates) about the first object 403 and the second object 404 by using the methods illustrated in FIG. 3. Using the methods proscribed in FIG. 3, the absolute distances of the first object 403 and the second object 404 both may be calculated. Alternatively, one object may be set as a reference object and the relative distance of the other object may be calculated with respect to the reference object.

In an example, if the 3D position information of the first object 403 and the second object 404 is obtained, the image processor 102 may extract AR information from the AR data storage 105. Accordingly, AR data 405 related to the first object 403 and AR data 406 related to the second object 404 may be extracted from the AR data storage 105.

Once the AR data 405 and 406 are extracted, the image processor 102 converts the AR data 405 and 406 according to the 3D position information of the corresponding objects 403 and 404, respectively. Since the first object 403 is placed in front of the second object 404, the AR data 405 and 406 are converted so that the AR data 405 of the first object 403 is placed in front of the AR data 406 of the second object 404. In an example, the AR data 405 of the first object 403, a first AR data 405-1 on augmented image 407 and a second AR data 405-2 on augmented image 408 are separately generated.

Once the AR data 405 and 406 have been converted, the image processor 102 superimposes the converted AR data 405-1, 405-2, 406-1 and 406-2 onto the respective images 401 and 402. More specifically, the AR data 405 of the first object 403, AR data 405-1, is superimposed onto the left eye image 401 as augmented image 407 and a second AR data 405-2 is superimposed onto the right image 402 as augmented image 408. Similarly, the AR data 406 of the second object 404, AR data 406-1, is superimposed onto the left eye image 401 as image 407, and a second AR data 406-2 is superimposed onto the right image 402 as image 408. Further, in an example, the AR data 405 of the first object 403, a first AR data 405-1 and a second AR data 405-2 may be separately generated. Augmented images 407 and 408 are then combined to form a final 3D image 409.

In the generated 3D image 409, the first object 403 is displayed in front of the second object 404, and also the AR data 405 of the first object 403 is displayed in front of the AR data 406 of the second object 404. In the 3D image 409, the objects 403 and 404 and the AR data 405 and 406 are all generated on the basis of the left eye image 401 and the right eye image 402, and thus "front" or "rear" mentioned herein does not indicate two-dimensional perspective but indicates "front" or "rear" in a 3D image.

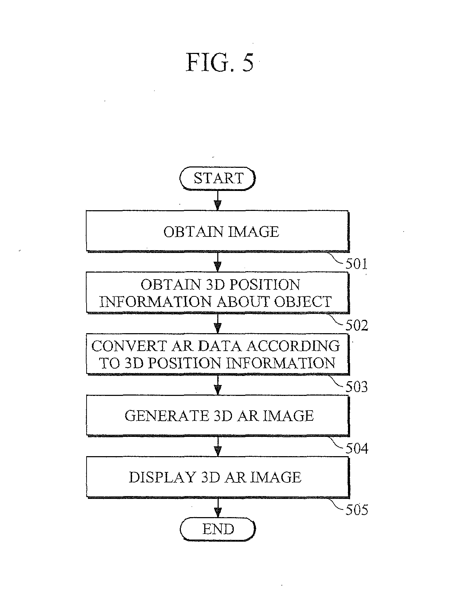

FIG. 5 is a flowchart illustrating a method for providing a 3D AR image according to an exemplary embodiment of the invention. This method can be performed by the apparatus 100 for providing 3D AR shown in FIG. 1. The method according to this exemplary embodiment will be described with reference to FIG. 1 and FIG. 5.

First, an image including an object is obtained (operation 501). For example, the image obtainer 101 can take a left image and right image of an object.

After the image has been obtained, 3D position information about the object included in the image is calculated (operation 502). For example, the image processor 102 can measure the distance of the object using the methods illustrated in FIG. 3.

When the 3D position information is calculated, AR data corresponding to the object is extracted and converted according to the calculated 3D position information (operation 503).

Once AR data is converted, a 3D AR image is generated using the converted AR data and the obtained image (operation 504). In an example, the image processor 102 may superimpose the first AR data onto the left image and the second AR data onto the right image, producing an augmented left image and right image. By combining the augmented left image and right image, a 3D AR image may be generated.

After the 3D AR image has been generated, the generated 3D AR image is displayed (operation 505). In an example, if the generated AR image includes a first object and a second object, where the second object is positioned farther than the first object, the image display 103 can display the 3D AR image so that AR data corresponding to the first object is seen closer than AR data corresponding to the second object.

As described above, the disclosed apparatus and method provide AR data according to 3D position information of an object, and thus can implement realistic 3D AR.

Meanwhile, the exemplary embodiments of the present invention can be embodied as computer-readable codes on a computer-readable recording medium. The computer-readable recording medium includes all kinds of recording devices storing data that is readable by a computer system. The computer-readable code may be executed by a computer having a processor and memory.

Examples of the computer-readable recording medium include read-only memories (ROMs), random-access memories (RAMs), (compact disc) CD-ROMs, magnetic tapes, floppy disks, optical data storage devices, and carrier waves (e.g., data transmission through the Internet). The computer-readable recording medium can be distributed over network connected computer systems so that the computer-readable code is stored and executed in a distributed fashion. Functional programs, code, and code segments needed for realizing the present invention can be easily deduced by computer programmers skilled in the art.

It will be apparent to those of ordinary skill in the art that various modifications and variation can be made in the present invention without departing from the spirit or scope of the invention. Thus, it is intended that the present invention cover the modifications and variations of this invention provided they come within the scope of the appended claims and their equivalents.

## Claims

1. An image processor to provide three-dimensional (3D) augmented reality (AR) image, comprising:

    a 3D position information calculator to calculate 3D position information of an object included in an image;
    an AR data converter to obtain AR data corresponding to the object,
    and to convert the AR data according to the 3D position information; and
    an AR image generator to generate a 3D AR image using the converted AR data and the image.

2. The apparatus of claim 1, wherein the 3D position information calculator obtains distance information of the object using a first image of the object and a second image of the object, and calculates the 3D position information using the obtained distance information.

3. The apparatus of claim 1, wherein the 3D position information calculator obtains distance information of the object using an auto-focusing function, and calculates the 3D position information using the obtained distance information.

4. The apparatus of claim 1, wherein the AR data converter superimposes the converted first AR data onto a first image of the object and superimposes the converted second AR data onto a second image of the object on the basis of the 3D position information.

5. The apparatus of claim 4, wherein the AR image generator superimposes the first AR data onto the first image and the second AR data onto the second image, and generates the 3D AR image using the augmented first image and second image.

6. An apparatus to provide three-dimensional (3D) augmented reality (AR) image, comprising:

    an image obtainer to obtain an image including an object; and
    an image processor according to one of the preceding claims to calculate 3D position information of the object, to obtain AR data corresponding to the object, to convert the AR data according to the 3D position information, and to generate a 3D AR image using the converted AR data and the image.

7. The apparatus of claim 6, wherein the image obtainer comprises:

    a first camera to obtain a first image of the object;

    and
    a second camera to obtain a second image of the object,
    wherein the image processor preferably obtains distance information of the object using the first image and the second image, and calculates the 3D position information using the distance information, or
    wherein the image processor preferably obtains distance information of the object using an auto-focusing function of the first camera or the second camera, and calculates the 3D position information using the distance information, or
    wherein the image processor preferably generates first AR data to be superimposed onto the first image and second AR data to be superimposed onto the second image on the basis of the 3D position information, superimposes the generated first AR data onto the first image to form an augmented first image and superimposes the generated second AR data onto the second image to form an augmented second image, and then generates the 3D AR image by combining the augmented first image and the augmented second image.

8. The apparatus of claim 6 or 7, wherein the generated 3D AR image comprises;
    a first object and a second object, positioned farther than the first object.

9. The apparatus of claim 8, wherein second AR data corresponding to the second object and to be superimposed onto the second image is positioned farther than the first AR data corresponding to the first object and to be superimposed onto the first image.

10. The apparatus of one of claims 6 to 9, the apparatus further comprising a sensor, comprising:

    a global positioning system (GPS) sensor, an acceleration sensor, or a terrestrial magnetism sensor, wherein the image processor preferably designates an area in the obtained image using sensing information of the sensor and detects the object in the designated area; or/and the apparatus further comprising an image display to display the 3D AR image.

11. A method for providing three-dimensional (3D) augmented reality (AR) image, comprising:

    obtaining an image including an object;
    calculating 3D position information of the object;
    obtaining AR data corresponding to the object;
    converting the AR data according to the 3D position information;
    generating a 3D AR image using the converted AR data and the obtained image; and displaying the generated 3D AR image, wherein the obtaining of the image preferably comprises obtaining a first image and a second image of the object.

**12.** The method of claim 11, wherein calculating the 3D position information comprises obtaining distance information about the object using the first image and the second image, and calculating the 3D position information using the obtained distance information.

**13.** The method of claim 11, wherein calculating the 3D position information comprises obtaining distance information about the object using an auto-focusing function of a camera for obtaining the first image and the second image, and calculating the 3D position information using the obtained distance information.

**14.** The method of claim 11, wherein converting the AR data comprises superimposing the converted first AR data onto the first image and superimposing the converted second AR data onto the second image on the basis of the 3D position information.

**15.** The method of claim 14, wherein generating the 3D AR image comprises superimposing the first AR data onto the first image and the second AR data onto the second image, and generating the 3D AR image using the augmented first image and second image.

**16.** The method of one of claims 11 to 15, wherein displaying the AR image comprises displaying the 3D AR image so that AR data corresponding to the first object is displayed closer than AR data corresponding to the second object, if the generated AR image comprises a first object and a second object, where the second object is positioned farther than the first object.

FIG. 1

100

SENSOR
~104

IMAGE
OBTAINER
~101

IMAGE
PROCESSOR
~102

IMAGE
DISPLAY
~103

AR DATA
STORAGE
~105

FIG. 2

102

```
┌─────────────────┐
│     OBJECT      │
│    DETECTOR     │
└─────────────────┘
         │        ⌐204
         ▼
┌─────────────────┐     ┌─────────────────┐     ┌─────────────────┐
│  3D POSITION    │     │    AR DATA      │     │   AR IMAGE      │
│  INFORMATION    │ ──► │   CONVERTER     │ ──► │   GENERATOR     │
│  CALCULATOR     │     │                 │     │                 │
└─────────────────┘     └─────────────────┘     └─────────────────┘
        ⌐201                   ⌐202                    ⌐203
```

FIG. 3

FIG. 4

FIG. 5

START

OBTAIN IMAGE
~501

OBTAIN 3D POSITION
INFORMATION ABOUT OBJECT
~502

CONVERT AR DATA ACCORDING
TO 3D POSITION INFORMATION
~503

GENERATE 3D AR IMAGE
~504

DISPLAY 3D AR IMAGE
~505

END

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020100063053